# EUROPEAN PATENT APPLICATION

(11) **EP 2 557 535 A2**
(43) Date of publication of application: **13.02.2013**
(21) Application number: 11766170.2
(22) Date of filing: 07.04.2011
(51) Int. Cl.: G06Q 50/00, G06F 21/00

(54) **CONTENT OPEN LICENSING SYSTEM FOR APPLICATION STORE AND METHOD THEREOF**

(30) Priority: 07.04.2010 KR 20100031827
(71) Applicant: Kim, In-Sang, Gyunggi-do 411-748 (KR)
(72) Inventor: Kim, In-Sang, Gyunggi-do 411-748 (KR)
(74) Representative: Körber, Martin Hans
(86) International application number: PCT/KR2011/002448
(87) International publication number: WO 2011/126319

(57) **Abstract**

The present invention relates to a content open licensing system for an application store which is included in or is linked to an application store and a method thereof, and more particularly to an open type licensing system and a method thereof which sells an application through the application store and can distribute profit to a copyright holder and a program developer after the program developer for developing the application for the application store easily obtains a license for content copyright (including a portrait right) of a character and the like to be used for the application and develops the application. The content open licensing system of the present invention which is included in or is linked to the application store provides a user interface through which a content copyright holder uploads content works and can input images and explanations related thereto and comprises: a means for permitting a content license through which the content copyright holder can input his content licensing permission conditions; a searching means for searching the registered content licensing substances; a licensing purchase request means through which the program developer obtains the license for the contents; a license management means for managing the contracted license; a means for determining compliance of contract conditions which determines whether the application of the developer complies with the licensing permission conditions; an application management means for managing the developed application; a means for calculating and balancing a profit distribution amount which distributes a profit amount due to the application to the content copyright holder and the developer; a licensing expiration date calculation means for calculating and reporting the licensing expiration date; and a storing means for storing identifiers of the content copyright holder and the contents and identifiers of the developer having the license for the contents and the application of the developer corresponding to the identifiers of the content copyright holder and the contents.

## Description

### TECHNICAL FIELD

The present invention relates to a contents open licensing system and a method thereof which can be included in or linked to an application digital distribution platform such as App Store of Apple, and more specifically, to an open licensing system and a method thereof, in which a program developer who desires to develop an application (appl) for the App Store may easily purchase and use a license for contents such as a character, a scenario or the like that will be used for the appl.

### BACKGROUND ART

Recently, appls (applications) provided by App Store of Apple Inc. are very popular among users of iPod touch, iPhone, iPad and the like, which are mobile terminals of Apple.

The secret of the popularity of the Apple App Store lies in publicizing the software development kit (SDK) of the App Store so that a lot of program developers in the world may freely develop appls of their own.

Stimulated by the success of the open application digital distribution platform represented by the Apple App Store, Samsung Electronics Co. Ltd. also has developed a digital distribution platform called Bada, and SK Telecomm Co. Ltd. operates a kind of App Store called T Store. In addition, communication companies in the world prepare to develop a super app store referred to as Wholesale App Community (WAC).

Meanwhile, in the market of media contents, a large number of image-type contents, including characters, main characters of a cartoon and real persons such as TV stars, actors or the like, are commercially used.

However, when individual and small-and-medium scale program developers desire to legally use such popular contents, high cost will be an obstacle. In addition, a large amount of time and a negotiation procedure are required to make a contract for using the contents. Therefore, practically, general developers are almost impossible to use the popular characters or main characters of a cartoon in their applications.

However, if a large number of developers may have a chance to legally obtain a right to use a license for the popular characters or main characters of a cartoon at a low price just as the Apple App Store has succeeded by opening the SDK to developers at a low price, chances of developing innovative appls using such popular characters will be extended.

In addition, copyright problems are worsened such that contents copyright holders such as character designers, cartoonists, scenario writers and the like severely suffer from copyright infringements such as illegal copy and illegal download, and profitability is lowered in this situation. Therefore, needs and desires for creating additional profit by licensing contents are gradually increased.

Particularly, recent domestic and foreign contents industry sells only a right to use contents for a predetermined period, and thus a copyright holder (or an agent), i.e., the owner of the contents, makes a profit as a licensor in return for permitting the license to be used. A person who has acquired a right to use the license (licensee) makes a profit using the contents within a range permitted by the licensor and shares the profit with the licensor, and thus both of the licensee and the licensor enjoy the profit. Accordingly, a win-win consensus in using the license matures in the market.

### DISCLOSURE OF INVENTION

### TECHNICAL PROBLEM

An application digital distribution platform such as App Store currently provides only a distribution and sales service for completed applications developed and uploaded by application developers. The digital distribution platform mainly oriented to the completed applications does not intervene in licensing and profit sharing between the application developers and copyright holders having a license for contents such as characters or the like. As a result, this works as a reason of discouragement in developing applications of a new type using further diverse characters.

For example, although general developers providing the App Store with applications have ideas and stories in the process of developing the applications, the developers suffer from a lot of difficulties in additional cost, time, efforts and the like in developing or borrowing characters used in the applications. In some cases, the developers may desire to use popular characters for their own applications. On the other hand, copyright holders of contents such as characters are frequently infringed on the copyright of their own contents works, and creation of profit and increase in using the contents through licensing of the contents works are needed furthermore.

However, practically, it is expensive to obtain a right to use a license for popular characters for individual or small-and-medium scale program developers, and the process of making an agreement on the licensing is inconvenient and hard to access.

Furthermore, from the viewpoint of a company operating the application digital distribution platform such as the App Store, required is a chance of securing further diverse applications of a good quality.

### TECHNICAL SOLUTION

The present invention has been made in view of the above problems, and it is an object of the present invention to provide an environment in which it is easy to use a license for a popular character at a relatively low price through a contents open licensing system included in or linked to an application digital distribution platform such as App Store.

It is since that success of the Apple APP Store lies in opening the SDK to the public so that a large number of developers are permitted to freely develop appls of the APP Store.

Similarly, if copyrights on contents are publicized so that a license for the contents can be conveniently accessed at a low price as far as the contents can be traced owing to the advancement in digital technologies, further ingenious appls can be created using the copyrights of the contents.

Furthermore, contents copyright holders may have further wider chances for selling a right to use the contents.

The present invention has been made to meet the requirements described above, and it is an obj ect of the present invention to provide a contents open licensing system and a method thereof included in or linked to an App Store, in which a program developer who desires to develop an appl for a digital distribution platform such as the App Store may easily obtain and use a license for contents such as a character or a scenario that will be used for the appl, through the contents open licensing system included in or linked to the application digital distribution platform such as the App Store.

The other objects and advantages of the present invention will be described below and understood through embodiments of the present invention. In addition, the objects and advantages of the present invention can be implemented through the means and combinations thereof shown in the claims.

Particularly, the terminology 'app store' used in the present invention generally refers to an application digital distribution platform. Accordingly, the 'app store' used in the present invention should be understood as a terminology generally referring to all kinds of open digital distribution platforms including Android Market of Google, Bada of Samsung, T Store of SK Telecomm and the like, as well as App Store of Apple.

### ADVANTAGEOUS EFFECTS

The present invention described above may further diversify and revitalize development of appls uploaded to and sold at the app stores.

In addition, a program (application) developer may save time and cost that are required to design and develop applications, and quality of the applications and effect of advertisement will be further improved if popular and well-known characters are used.

Copyright holders of contents such as a character or the like may increase profit by selling a right to use the contents to developers in the world in a low-price high-volume policy.

Meanwhile, the contents open licensing system will further improve functions of the app store and enhance utilization of the app store.

Furthermore, it is apparent that, in the future, the contents open licensing system can be used for selling licenses of smart TVs or Internet applications, as well as tablet devices such as smart phones, iPads or the like, and for sharing the profit created from the licenses.

### BRIEF DESCRIPTION OF THE DRAWINGS

FIG. 1 is a view showing the configuration of an app store system according to an embodiment of the present invention.

FIG. 2 is a view illustrating the operation of a contents open licensing system linked to an app store service according to an embodiment of the present invention.

FIG. 3 is a view showing the configuration of a contents open licensing system linked to an app store service according to an embodiment of the present invention.

FIG. 4 is a view showing the structure of a user information database according to an embodiment of the present invention.

FIG. 5 is a view showing the structure of a contents information database according to an embodiment of the present invention.

FIG. 6 is a view showing the structure of an appl (application) information database according to an embodiment of the present invention.

FIG. 7 is a flowchart illustrating a contents open licensing method linked to an app store service according to an embodiment of the present invention.

FIG. 8 is a view showing a method of inputting contents licensing conditions into a contents open licensing system linked to an app store service by a contents copyright holder according to an embodiment of the present invention.

FIG. 9 is a view showing a method of purchasing a right to use desired contents after connecting to a contents open licensing system linked to an app store service by a program developer according to an embodiment of the present invention.

FIG. 10 is a view showing a result of a contents licensing contract, which is automatically created after a program developer purchases a right to use contents through a contents open licensing system that can be linked to an app store service, according to an embodiment of the present invention.

### DESCRIPTION OF SYMBOLS

11: Contents copyright holder terminal
12: Program developer terminal
13: Digital data network
14: Mobile communication network (Wireless Internet)
15: Digital data network
16: Mobile communication terminal (Smart phone, IPad or the like)
17: User terminal
18: User TV
100: App store system
200: Contents open licensing system
31: Interface unit
32: Contents licensing permission unit
33: Contents search unit
34: License purchase unit
35: License management unit
36: License contract condition compliance examination unit
37: Appl management unit
38: Profit sharing amount calculation and settlement unit
39: License expiration date calculation unit
301: User information database
302: Contents information database
303: Appl information database

### BEST MODE FOR CARRYING OUT THE INVENTION

The present invention relates a contents open licensing system included in or linked to an app store, the system including a user interface for uploading contents of a contents copyright holder and inputting descriptions thereof; a contents licensing permission means for inputting content licensing permission conditions of the contents copyright holder; a contents license search means for searching for details of contents registered for licensing; a license purchase request means for obtaining permission for using a contents license by a program developer; a license management means for managing a contracted license; a license contract condition compliance examination means for examining whether or not an appl developed by the developer complies with license contract conditions; an appl management means for managing the developed appl; a profit sharing amount calculation and settlement means for sharing profit generated from the appl between the contents copyright holder and the developer; a license expiration date calculation means for calculating and reporting a license expiration date; and a storage means for storing identifiers of the contents copyright holder, the developer permitted to use the license for the contents and the appl developed by the developer so as to correspond to one another.

In addition, the present invention relates a contents open licensing method included in or linked to an app store, the method including: a registration step of registering contents for licensing in a contents open licensing system, by a contents copyright holder; a contents license search step of searching for details of the contents registered for licensing; a purchase step of consenting to licensing conditions, depositing a down payment and promising profit sharing in the future by a program developer in order to obtain permission for using the license for the contents; a license management step of assigning a management number for managing a contracted license; a lisence contract condition compliance examination step of examining whether or not an appl developed by the developer complies with the licensing permission conditions of the contents copyright holder; an appl management step of continuousely managing the developed appl; a profit sharing amount calculation and settlement step of sharing profit generated from the appl between the developer and the contents copyright holder; and a license expiration date calculation step of calculating and reporting a contents license expiration date.

Exemplary embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention. The drawings are not necessarily to scale and in some instances, proportions may have been exaggerated in order to clearly illustrate features of the embodiments. When a first layer is referred to as being "on" a second layer or "on" a substrate, it not only refers to a case where the first layer is formed directly on the second layer or the substrate but also a case where a third layer exists between the first layer and the second layer or the substrate.

The preferred embodiments of the present invention will be hereinafter described in detail, with reference to the accompanying drawings.

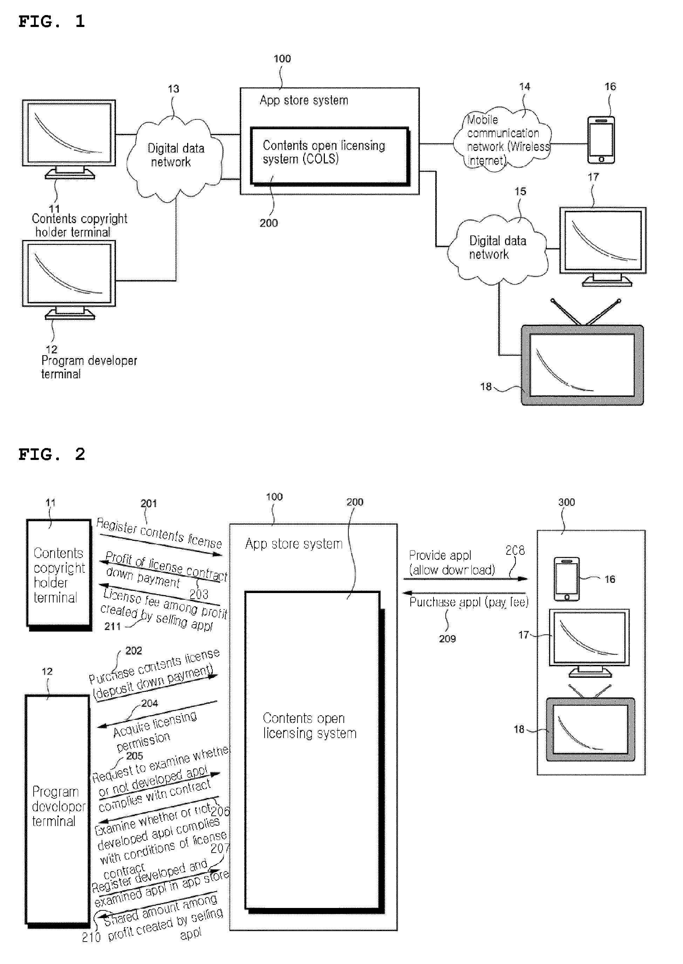

FIG. 1 is a view showing the configuration of an app store system according to an embodiment of the present invention.

As shown in FIG. 1, the contents open licensing system applying the present invention includes a contents copyright holder terminal 11, a program developer terminal 12, digital data networks 13 and 15, an app store system 100, a contents open licensing system 200, a mobile communication network 14, a mobile communication terminal 16 of a user such as a smart phone, a user terminal 17 and a user TV 18.

The contents copyright holder terminal 11 is an apparatus for using an app store including or linking to the contents open licensing system and performs input and output of personal information of a contents copyright holder, details of contents, licensing conditions and the like.

The digital data networks 13 and 15 are networks for transmitting the contents and the licensing information provided by the app store and the contents open licensing system, transferring information and trading details between the contents copyright holder and a program developer, and allowing final consumers (users) to use the application, for which a wired or wireless Internet (an IP network), a cable network, a public switched telephone network (PSTN), or the like can be used.

The app store system 100 includes a storage server for storing contents for licensing and a control server for processing various requests from system users such as contents copyright holders, program developers, consumers and the like.

Here, the control server may include or link to the contents open licensing system 200 according to an embodiment of the present invention.

The contents open licensing system 200 receives and analyzes the contents and the licensing information of the contents copyright holder and receives and processes a request for purchasing a right to use the license received from the program developer.

In addition, the contents open licensing system 200 is included in or liked to the app store system depending on a result of a license contract made through the system of the present invention, and it uploads an appl (application) developed using the license and shares sale and profit information.

Here, the contents include language-type copyrights configured of text such as music, sound sources, novels, dramas, scenarios and the like, as well as image-type copyrights such as characters, main characters of a cartoon, popular entertainers, sport stars and celebrities.

In addition, the contents open licensing system 200 may be constructed as a part of the app store system function, or it can be separately constructed and linked to the app store system while communicating only with some needed parts.

Of course, the contents open licensing system 200 can be independently constructed and operated without being physically linked to the app store system. At this point, calculation of profit can be complemented by a fair and transparent settlement process under the agreement made among related companies.

Hereinafter, the detailed configuration and operation procedure of the contents open licensing system 200 will be described with reference to FIGs. 2 to 7.

FIG. 2 is a view illustrating the operation of a contents open licensing system 200 linked to an app store service according to an embodiment of the present invention.

First, the contents open licensing system 200 receives copyright holder information, contents information and licensing conditions from the contents copyright holder terminal 201.

Then, the contents open licensing system 200 accepts (stores in a database) and manages the received contents-related information.

Next, a program developer searches for desired contents, gives consent to licensing conditions and purchases a right to use the license (pays a fee for using the license) 202.

At this point, the prepaid use fee is paid to the contents copyright holder, subtracting a system operation fee 203.

The program developer receives a licensing permission management number or the like assigned by the contents open licensing system 200 and develops his or her own appl using the contents 204.

If development of the appl is completed, the program developer terminal 12 requests to examine whether or not the developed appl complies with the conditions presented by the contents copyright holder, through the contents open licensing system 205. The contents open licensing system 200 notifies the contents copyright holder that the request for examination is accepted, and the contents copyright holder examines the corresponding appl 206.

Of course, the contents copyright holder may delegate examination of the corresponding appl to an agent or the contents open licensing system so that the examination may be automatically processed using artificial intelligence.

The appl passing the examination is registered in the app store 207.

Next, consumers purchase and use a corresponding appl through the app store 208.

Profit created by selling the appl is once paid to the app store 209.

A profit amount excluding a portion of the app store and a portion of the contents open licensing system from the profit created by selling the appl is paid to the program developer and the contents copyright holder 210 and 211.

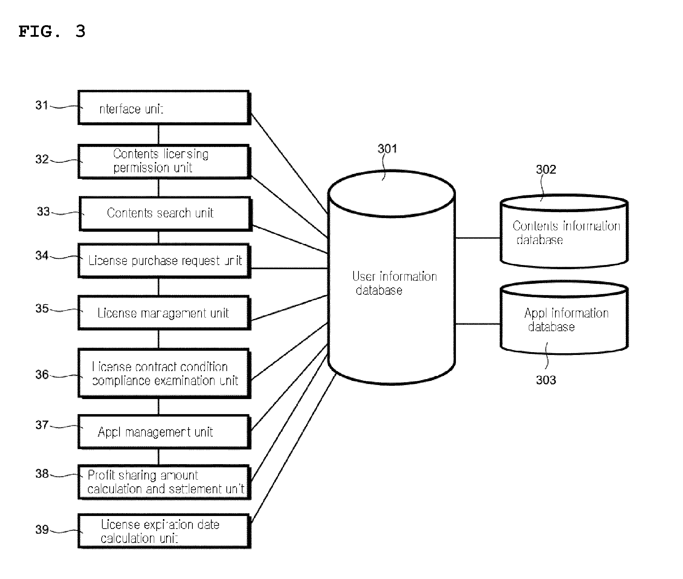

FIG. 3 is a view showing the configuration of a contents open licensing system linked to an app store service according to an embodiment of the present invention.

As shown in FIG. 3, the contents open licensing system 200 linked to an app store service according to an embodiment of the present invention includes an interface unit 31, a contents licensing permission unit 32, a contents search unit 33, a license purchase unit 34, a license management unit 35, a license contract condition compliance examination unit 36, an appl management unit 37, a profit sharing amount calculation and settlement unit 38 and a license expiration date calculation unit 39.

The interface unit 31 provides an interface for inputting information on the contents copyright holder and the program developer and requesting a trade.

The contents licensing permission unit 32 receives and stores conditions such as use conditions, an amount, a period and the like requested by the contents copyright holder to make a contract for licensing his or her contents. The contents search unit 33 provides a list of contents in response to a request from a user (a copyright holder, a developer, etc) received through the interface unit 31 so that the user may search for desired contents, and specific contents is selected as a result thereof.

The license purchase unit 34 allows a program developer to select desired contents among the licensing contents and obtain a right to use the contents by paying a relevant use fee.

The license management unit 35 stores and manages related information such as conditions on the license contract for the contents that the program developer is permitted to use.

The license contract condition compliance examination unit 36 may automatically examine whether or not an appl developed by the program developer complies with the licensing conditions of the contents copyright holder using artificial intelligence or examine the appl through an in-depth review of an examiner, and may pass or reject the appl.

The appl management unit 37 stores and manages information on the appl passing the examination. At a later time, profit sharing amounts can be calculated and settled through the appl management unit.

Based on the profit of the appl developed and registered in the app store, the profit sharing amount calculation and settlement unit 38 calculates profit amounts such as fees for the contents copyright holder and the contents open licensing system and profit of the program developer in a profit distribution method and pays the profit amounts to relevant persons.

The license expiration date calculation unit 39 performs a notification function for transmitting a message or an email to those who are concerned from three or more months before the license expiration date. In addition, the license expiration date calculation unit 39 may take an action so as not to distribute related appls through the app store if the corresponding license contract is expired.

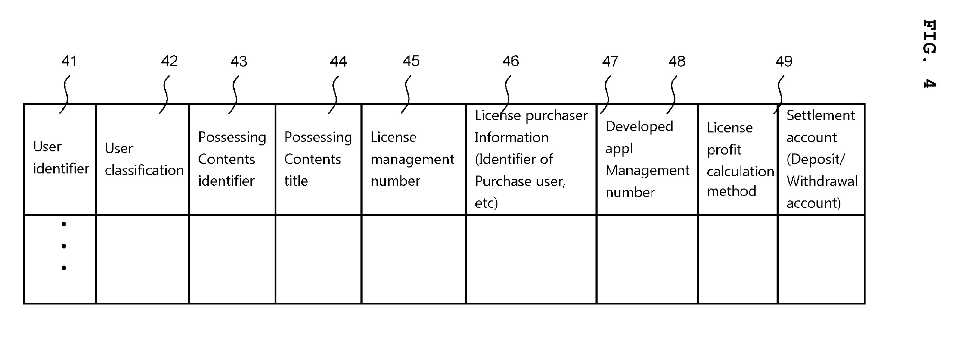

As shown in FIG. 4, the user information database 301 includes a user terminal identifier field 41, a receiver phone number field 42, a mobile contents selection information field 43, a use fee field 44 and a use time field 45.

FIG. 4 is a view showing the structure of a user information database according to an embodiment of the present invention. As shown in the figure, the user information database 301 includes a user identifier field 41, a user classification field 42, a possessing contents identifier field 43, a possessing contents title field 44, a license management number field 45, a license purchaser information field 46, a developed appl management number field 47, a license profit calculation method information field 48 and a settlement account field 49.

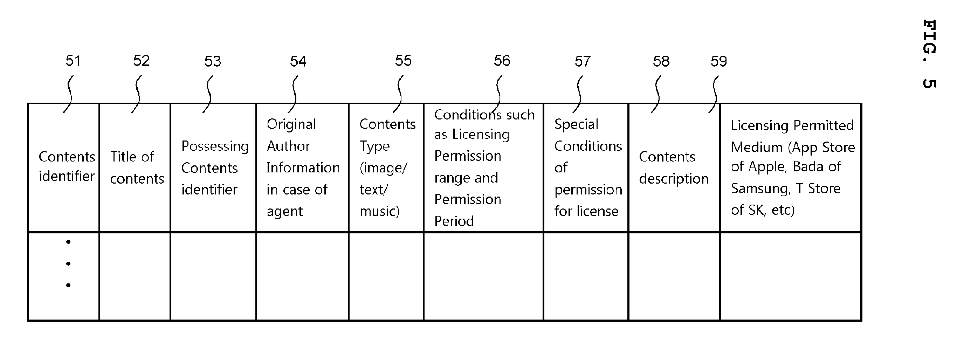

FIG. 5 is a view showing the fields of a contents information database and includes a contents identifier field 51, a contents title field 52, a possessing contents identifier field 53, an original author information field 54 in the case of an agent, a contents type field 55, and a condition field 56 containing a licensing permission range and a permission period.

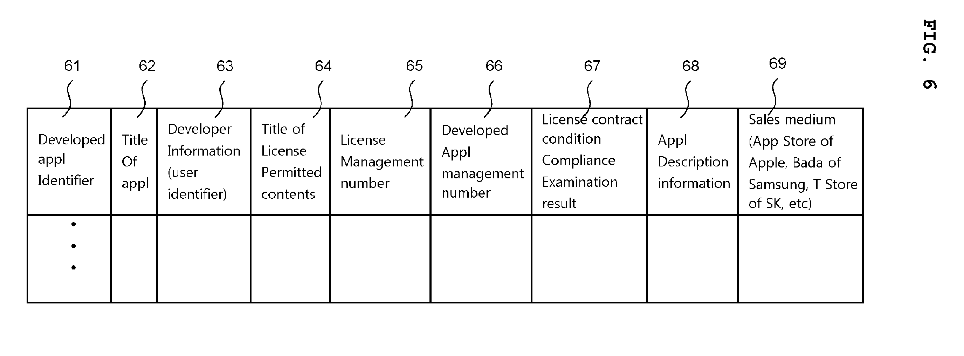

FIG. 6 is a view showing an appl information database and includes a developed appl identifier field 61, an appl title field 62, a developer information field 63, a licensing permitted contents title field 64, a license management number field 65, a developed appl management number field 66, a license contract condition compliance examination result field 67, an appl description information field 68, and a sales medium field 69.

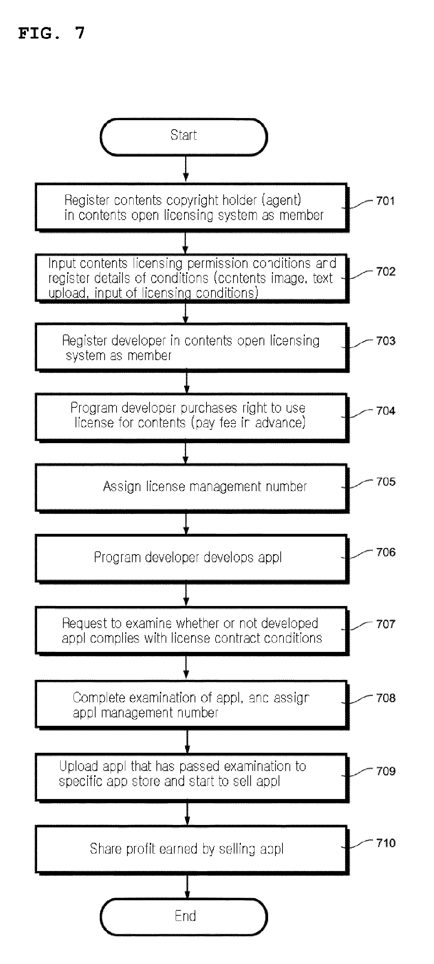

Hereinafter, a contents open licensing method linked to an app store service according to an embodiment of the present invention will be described with reference to FIG. 7.

FIG. 7 is a flowchart illustrating a contents open licensing method linked to an app store service according to an embodiment of the present invention.

First, a contents copyright holder registers in the contents open licensing system of the present invention as a member so as to input his or her own contents and licensing conditions 701.

Next, the contents copyright holder receives and registers conditions needed for making a contract, such as use conditions, an amount, a period and the like for licensing his or her contents 702.

Meanwhile, a program developer also registers in the contents open licensing system of the present invention as a member 703.

Next, the program developer selects desired contents through contents search and obtains a right to use the contents by paying a relevant use fee 704.

Next, the system stores and manages license information such as a license management number or the like of the contents that the program developer is permitted to use as described above 705.

Next, the program developer requests to examine whether or not the appl developed by the developer 706 faithfully complies with the license contract conditions 707.

A system manager and the contents copyright holder may examine whether or not the appl developed by the program developer is developed in compliance with the licensing conditions of the contents copyright holder and pass or reject the appl, or such an examination process can be replaced with an automated examination using computer recognition, condition comparison, artificial intelligence or the like.

If the appl safely passes the examination, an appl management number is assigned to the appl 708.

Next, the program developer starts to sell the passed appl through the app store 709.

Based on the profit of the sold appl, profit amounts, such as fees for the contents copyright holder and the contents open licensing system and profit of the program developer, are calculated in a profit sharing method and paid to relevant persons 710.

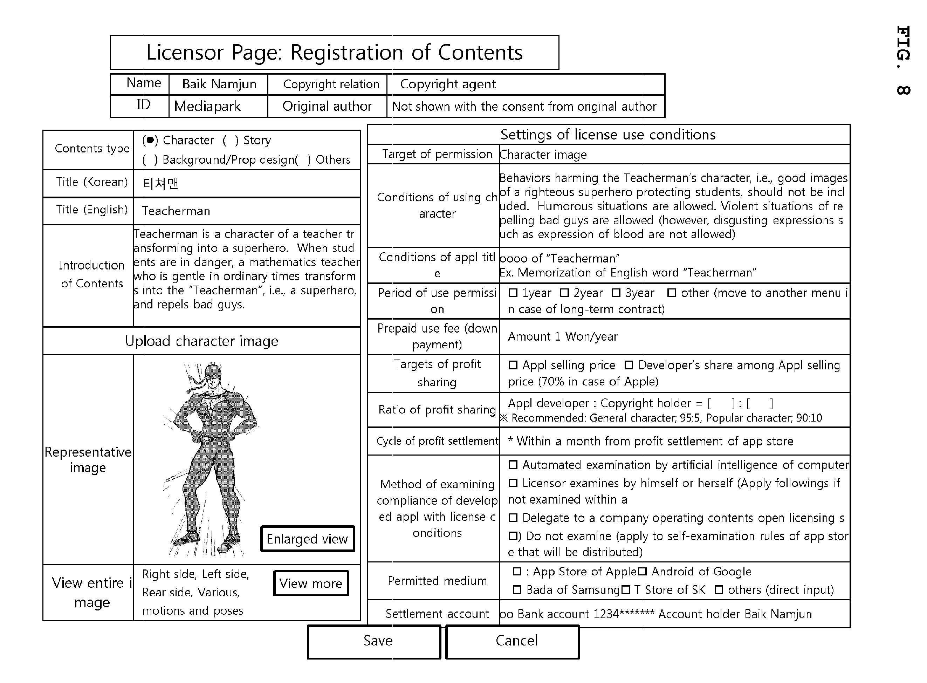

FIG. 8 is a view showing a method of inputting contents licensing conditions into a contents open licensing system linked to an app store service by a contents copyright holder according to an embodiment of the present invention.

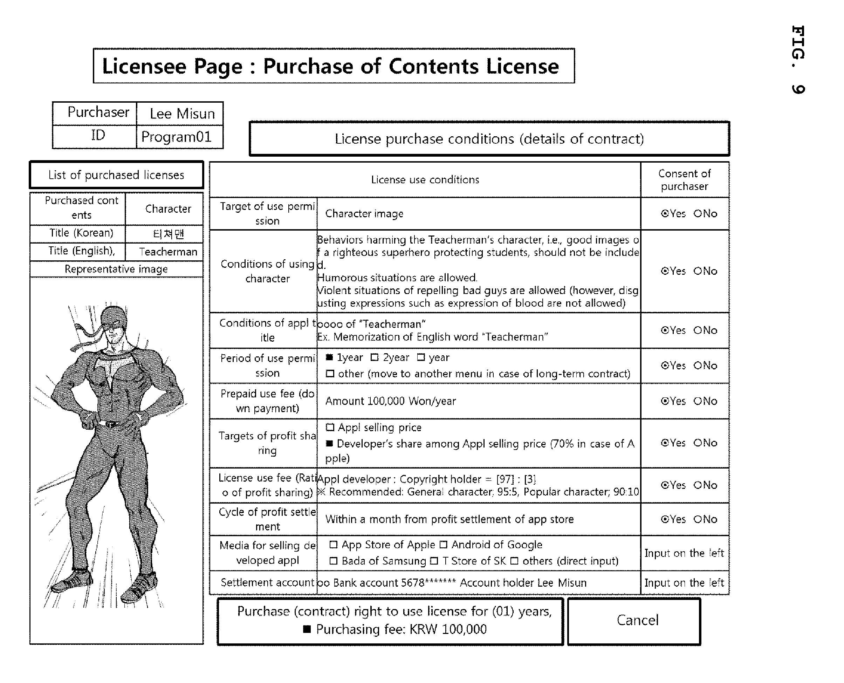

FIG. 9 is a view showing a method of purchasing a right to use desired contents after connecting to a contents open licensing system linked to an app store service by a program developer according to an embodiment of the present invention.

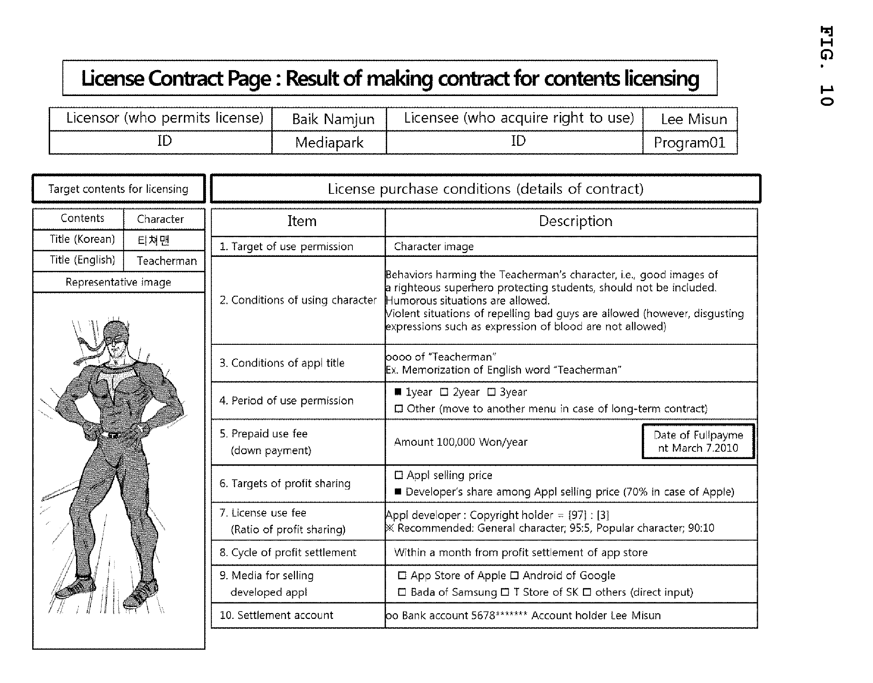

FIG. 10 is a view showing a result of a contents licensing contract, which is automatically created after a program developer purchases a right to use contents through a contents open licensing system that can be linked to an app store service, according to an embodiment of the present invention.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

### INDUSTRIAL APPLICABILITY

The present invention relates to a contents open licensing system included in or linked to an existing app store platform, in which applications for the app store will be diversified, and chances of providing applications desired by customers will be increased.

If app store platform companies additionally provide the functions of the contents open licensing system of the present invention, such as App Store of Apple, Android Market of Google, Bada of Samsung and the like, developers in the world will create interesting applications using world-famous characters and celebrities (e.g., actors, comedians, singers, politicians, sport stars and the like).

For example, if Steve Jobs allows the license for his portrait rights (copyrights) to be used, a lot of developers in the world will create games and living appls using Steve Jobs. If Mickey Mouse license is permitted, developers in the world will create appls of new games using Mickey Mouse to be adequate for the circumstances of each country.

Accordingly, the present invention can be used in industry and will be a foundation of the socalled App Store 2.0, in which all the developers, copyright holders, platform companies and customers participate.

## Claims

1. A contents open licensing system included in or linked to an app store, the system comprising:
a user interface means for trading contents between a contents copyright holder and a program developer;
a contents licensing permission means for inputting content licensing permission conditions by the contents copyright holder;
a contents license search means for searching for details of the contents registered for licensing;
a license purchase means for obtaining permission for using a contents license by the program developer;
a license management means for assigning a license management number for managing a contracted license;
a lisence contract condition compliance examination means for examining whether or not an appl developed by the developer complies with the licensing permission conditions;
an appl management means for performing post-management of the developed appl;
a profit sharing amount calculation and settlement means for sharing profit generated from the appl between the developer and the contents copyright holder;
a license expiration date calculation means for calculating and reporting an expiration date of the contents licensing contract; and
a storage means for storing identifiers of the contents copyright holder, the contents registered by the the contents copyright holder, the developer permitted to use the license for the contents and the appl developed by the developer to correspond to each other.

2. The system according to claim 1, further comprising a link server for storing and managing link information so that the contents open licensing system may be included in or linked to the app store.

3. The system according to claim 1, wherein the contents licensing permission means allows the contents copyright holder to input specific license trading conditions for permitting use of the contents, such as use permission conditions, a contract period, a contract amount and profit sharing conditions.

4. The system according to claims 1 and 3, wherein the content license search means allows the program developer to search for contents that the program developer desires to use, together with corresponding contents licensing conditions.

5. The system according to any one of claims 1 and 3, wherein the license purchase means allows the program developer to consent to the licensing conditions and pay a license fee (purchase) after searching for and selecting contents that the program developer desires to use.

6. The system according to claim 1, wherein the license management means continuousely manages contract information such as contract conditions and the license management number of the contracted license, after the program developer purchases the contents license.

7. The system according to claim 1, wherein the license contract condition compliance examination means automatically or manually examines whether or not the appl developed using the corresponding contents after the program developer purchases the contents license complies with the license use conditions presented by the contents copyright holder.

8. The system according to claims 1 and 6, wherein the appl management means continuousely manages the appl developed by the program developer using the licensed contents so that the appl can be sold through the app store or the like and create profit after passing the license contract condition compliance examination process.

9. The system according to claim 1, wherein the profit sharing amount calculation and settlement means shares the profit generated by selling the appl based on a profit sharing ratio agreeded between the developer and the contents copyright holder, transfers details of the settlement to a user, and stores the details of the settlement in user information.

10. A contents open licensing method included in or linked to an app store, the method comprising:
a contents licensing permission registration step of registering contents for licensing in a contents open licensing system, by a contents copyright holder;
a contents license search step of searching for details of the contents registered for licensing;
a license purchase step of consenting to licensing conditions, depositing a down payment and promising profit sharing in a future by a program developer in order to obtain permission for using a license for the contents;
a license management step of assigning a license management number for managing a contracted license;
a lisence contract condition compliance examination step of examining whether or not an appl developed by the developer complies with the licensing permission conditions of the contents copyright holder;
an appl management step of continuousely managing the developed appl;
a profit sharing amount calculation and settlement step of sharing profit generated from the appl between the developer and the contents copyright holder; and
a license expiration date calculation step of calculating and reporting a contents license expiration date.

11. The method according to claim 10, wherein the contents licensing permission registration step allows the contents copyright holder to input specific license trading conditions for permitting use of the contents, such as use permission conditions, a contract period, a contract amount and profit sharing conditions.

12. The method according to claim 10, wherein the contents license search step allows the program developer to search for contents that the program developer desires to use, together with corresponding contents licensing conditions.

13. The method according to claim 10, wherein the license purchase step allows the program developer to consent to the licensing conditions and pay a license fee (purchase) after searching for and selecting contents that the program developer desires to use.

14. The method according to claim 10, wherein the license management step continuousely manages contract information such as contract conditions and the license management number of contracted license, after the program developer purchases the contents license.

15. The method according to claim 10, wherein the lisence contract condition compliance examination step examines whether or not the appl developed using the corresponding contents after the program developer purchases the contents license complies with the license use conditions presented by the contents copyright holder.

16. The method according to claims 10 and 14, wherein the appl management step continuousely manages the appl developed by the program developer using the licensed contents so that the appl can be sold through the app store or the like and create profit after passing the license contract condition compliance examination process.

17. The method according to claim 10, wherein the profit sharing amount calculation and settlement step shares the profit generated by selling the appl based on a profit sharing ratio agreeded between the developer and the contents copyright holder, transfers details of the settlement to a user, and stores the details of the settlement in user information.
